# EUROPÄISCHE PATENTSCHRIFT

(11) **EP 3 275 691 B1**
(45) Veröffentlichungstag und Bekanntmachung des Hinweises auf die Patenterteilung: **15.05.2019**
(21) Anmeldenummer: 17183409.6
(22) Anmeldetag: 26.07.2017
(51) Int. Cl.: B60B 27/02, B60B 27/04, F16D 41/36

(54) **NABE INSBESONDERE FÜR FAHRRÄDER**
COLLAR, IN PARTICULAR FOR BICYCLES
MOYEU, EN PARTICULIER POUR VÉLOS

(30) Priorität: 26.07.2016 DE 102016113733
(43) Veröffentlichungstag der Anmeldung: 31.01.2018
(73) Patentinhaber: DT Swiss AG, 2504 Biel (CH)
(72) Erfinder: Walthert, Martin, CH-3270 Aarberg (CH); Spahr, Stefan, CH-2543 Lengnau (CH)
(74) Vertreter: BSB Patentanwälte Schütte & Engelen Partnerschaft mbB

(56) Entgegenhaltungen:
- EP-A2- 1 566 287
- DE-A1- 19 856 626
- DE-U1- 9 419 357
- GB-A- 572 237
- GB-A- 668 943
- JP-A- 59 175 637

## Beschreibung

Die vorliegende Erfindung betrifft eine Nabe für wenigstens teilweise muskelbetriebene Fahrzeuge und insbesondere Fahrräder, wobei die Nabe ein Nabengehäuse umfasst, welches mit zwei an gegenüberliegenden Endbereichen des Nabengehäuses angeordneten Wälzlagern gegenüber einer Nabenachse drehbar gelagert ist. Die Nabe weist einen Rotor zur drehfesten Anordnung wenigstens eines Ritzels auf, der mit wenigstens zwei Rotorlagern gegenüber der Nabenachse drehbar gelagert ist. Zwischen dem Rotor und dem Nabengehäuse ist eine Freilaufeinrichtung vorgesehen.

Außer bei Fahrrädern kann die Erfindung aber auch bei anderen teilweise muskelbetriebenen Fahrzeugen eingesetzt werden, die zum Beispiel über einen elektrischen Hilfsantrieb verfügen. Insbesondere wird die Nabe bei sportlichen Fahrrädern und dergleichen eingesetzt.

Im Stand der Technik sind diverse Naben bekannt geworden, die einen Freilauf aufweisen, damit sich bei zum Beispiel einer Bergabfahrt die Tretkurbel nicht ständig mitdreht. Ein solcher Freilauf bewirkt auch, dass sich das Nabengehäuse und der Rotor beim Rückwärtstreten gegeneinander drehen können.

Im Stand der Technik sind Naben mit Sperrklinkenfreiläufen bekannt geworden, bei denen die Sperrklinken radial zwischen einer Freilaufstellung und einer Eingriffsstellung verschwenken können. Solche Naben verfügen über eine unterschiedliche Anzahl von Sperrklinken, wobei oft vier Sperrklinken symmetrisch auf dem Umfang verteilt angeordnet sind. Die Sperrklinken greifen bei Kraftübertragung in eine Verzahnung im Rotor ein. Durch die relativ geringe Zahl an Sperrklinken ist ein relativ großer Drehwinkel erforderlich, bis beim Antreten wieder ein Drehmoment übertragen wird.

Die EP 1 566 287 A2 zeigt eine Nabe mit einem Klinkenfreilauf bekannt geworden, wobei an den Enden der Nabe und am Rotor berührende Lippendichtungen angeordnet sind.

Mit der GB 572,237 A ist eine teilbare Freilaufnabe mit einem Klinkenfreilauf bekannt geworden, wobei der Rotor mit den Ritzeln bei einer Demontage am Rahmen verbleiben kann.

Mit der GB 668,943 ist eine Freilaufnabe für Fahrräder bekannt geworden, bei der in das Nabengehäuse ein schalenförmiges Teil eingeschraubt ist, an dessen Innenseite die Lauffläche für die Kugel des Kugellagers ausgebildet ist, während an einer sich radial nach außen erstreckenden Wandung eine Axialverzahnung ausgebildet ist, die zusammen mit einer Axialverzahnung an dem Rotor einen Axialfreilauf bildet. Durch die größere Anzahl der Zähne der Axialverzahnung bedingt, wird ein schnellerer Wiedereingriff beim Antritt erreicht. Nachteilig bei diesem System ist aber, dass der Rotor sich in axialer Richtung verschiebt, wenn die Nabe in den Freilaufzustand und in den Eingriffszustand überführt wird. Das könnte bei heutigen Systemen zu einer Gangumschaltung führen. Außerdem kann von außen Schmutz und Feuchtigkeit in den Freilauf eindringen und die Funktion beeinträchtigen oder sogar vollständig verhindern, was Gefahr für den Fahrer mit sich bringt.

Die DE 10 2010 033 268 A1 offenbart eine Nabe, bei der zwei Bauteile mit Stirnverzahnungen einen Axialfreilauf bilden. Zwei jeweils benachbarte Nabenlager an den Enden des Nabengehäuses dienen zur Abstützung gegenüber der Nabenachse. Nachteilig ist der große Platzbedarf für die benachbarten Nabenlager. Außerdem verfügt die Nabenachse über keine radialen Absätze und kann deshalb nicht zur axialen Abstützung der Nabenbauteile dienen. Zur axialen Abstützung der Nabe wird deshalb an einer Seite die Axialkraft von einem Wälzlager in das Nabengehäuse übertragen und an der anderen Seite wieder durch ein Wälzlager über auf der Nabenachse angeordnete Hülsenelemente abgeleitet. In einer weiteren stark schematisch enthaltenen Ausführungsform sind ein oder zwei Nabenlager innen an dem Bauteil mit der Stirnverzahnung aufgenommen und in noch einer anderen stark schematisch dargestellten Ausführungsform ist einstückig an dem äußeren Laufring des Nabenlagers eine Stirnverzahnung des Axialfreilaufs ausgebildet, wodurch bei Einsatz nur eines Nabenlagers axialer Bauraum eingespart werden kann. Den Schutz vor Staub und Wasser müssen Dichtungen an dem Nabengehäuse übernehmen. Der äußere Laufring verfügt auf seiner radialen Außenseite über eine unrunde Kontur, die in eine entsprechend unrunde Kontur des Nabengehäuses eingeschoben und somit drehfest mit dem Nabengehäuse gekoppelt ist. Eine axiale Fixierung des Nabenlagers wird nicht erwähnt. Dadurch kann das Nabenlager im Freilaufzustand axial wandern, wodurch die Nabe undefinierte Zustände einnehmen kann. Durch diese Gründe kann die Funktion beeinträchtigt werden.

Mit der DE 94 19 357 U1 ist eine Nabe mit einem Zahnscheibenfreilauf bekannt geworden, der zuverlässig und sehr schnell die Antriebskraft von dem Rotor auf das Nabengehäuse überträgt, während andererseits die Reibungsverluste relativ gering sind, wenn der Benutzer die Pedale nicht betätigt. Ein Zahnscheibenfreilauf hat viele Vorteile und ermöglicht ein besonders schnelles Ansprechen des Freilaufs. Bei diesem Freilauf wird über ein Paar von Zahnscheiben ein Vorwärtsdrehmoment des Rotors übertragen, während beim Rückwärtstreten die Zähne axial außer Eingriff kommen. Die bekannte Nabe funktioniert an sich zufriedenstellend und wird im sportlichen und auch professionellen Bereich eingesetzt. Die Kugellager werden in axialer Richtung über Distanzbüchsen definiert positioniert. Ein gewisser Nachteil ist allerdings, dass bei den hohen Belastungen der Nabe beispielsweise bei einer Bergauffahrt derartige Biegemomente an der Nabe auftreten können, dass eine leichte Verkippung einer Zahnscheibe auftreten kann, was zu einem größeren Verschleiß der stärker belasteten Zähne führt, sodass die Haltbarkeit begrenzt wird und die Zahnscheiben früh genug ausgetauscht werden müssen, um eine Fehlfunktion zu vermeiden.

Es sind auch Naben mit Zahnscheibenfreiläufen bekannt geworden, die über einen Freilauf mit einer Axialverzahnung verfügen, wobei eine Axialverzahnung fest in dem Rotor integriert ist und eine Zahnscheibe über eine oder mehrere Federn drehfest und axial verschiebbar in dem Nabengehäuse aufgenommen ist und in Richtung auf die Verzahnung in dem Rotor axial vorbelastet wird. In umgekehrter Funktionsweise ist auch eine Nabe bekannt geworden, die einen Zahnscheibenfreilauf aufweist und bei der eine Zahnscheibe fest in das Nabengehäuse integriert ist und bei der die andere Zahnscheibe über eine Feder in Richtung auf das Nabengehäuse vorbelastet ist. Beide Nabentypen, bei denen jeweils nur eine Zahnscheibe axial beweglich ist, haben aufgrund der hohen Belastungen im sportlichen oder professionellen Radsport wieder den Nachteil, dass einige Zähne stärker belastet werden können und schneller verschleißen, sodass ein frühzeitiger und regelmäßiger Austausch der Zahnscheiben, des Rotors oder sogar des Nabengehäuses empfehlenswert ist, um eine Fehlfunktion zu vermeiden.

Eine Alternative wäre es, eine Nabe mit einem Zahnscheibenfreilauf insgesamt durch Verwendung steiferer und somit schwererer Materialien oder durch den Einsatz größerer Wandstärken steifer auszugestalten, wodurch aber das Gewicht steigt. Da im sportlichen und professionellen Radsport allerdings jedes Gramm Gewicht zählt, wird dadurch nicht die gewünschte Lösung erzielt.

Mit der EP 1 121 255 B1 ist eine leichte Nabe mit einem Zahnscheibenfreilauf und einer zuverlässigen Funktion bekannt geworden, wobei eine gleichmäßigere Belastung der Zähne der Zahnscheiben erfolgt. Dazu werden bei dieser Nabe zwei Zahnscheiben eingesetzt, die jeweils axial beweglich sind und die jeweils über eine Feder axial von außen aufeinander zu gedrückt werden. Dadurch werden beide Zahnscheiben schwimmend gelagert und können sich bei zum Beispiel Durchbiegungen der Nabe oder bei sonstigen Belastungen jeweils besser zueinander ausrichten, sodass für eine gleichmäßigere Abnutzung der Zahnscheiben und einen besonders zuverlässigen Betrieb gesorgt wird. Eine noch steifere Nabe ist aber wünschenswert.

Eine weitere Nabe mit Zahnscheibenfreilauf ist aus JP 59 175637 A bekannt. Vor dem Hintergrund des Standes der Technik ist es deshalb die Aufgabe der vorliegenden Erfindung, eine Nabe zur Verfügung zu stellen, die eine zuverlässige Funktion zur Verfügung stellt und leicht oder gegebenenfalls noch leichter ist und die womöglich noch steifer ausgestaltet ist.

Diese Aufgabe wird durch eine Nabe mit den Merkmalen des Anspruchs 1 gelöst. Bevorzugte Weiterbildungen der Erfindung sind Gegenstand der Unteransprüche. Weitere Vorteile und Merkmale der vorliegenden Erfindung ergeben sich aus der allgemeinen Beschreibung und der Beschreibung des Ausführungsbeispiels.

Eine erfindungsgemäße Nabe ist für wenigstens teilweise muskelbetriebene Fahrzeuge und insbesondere Zweiräder und vorzugsweise Fahrräder vorgesehen und umfasst ein (insbesondere über Wälzlager) relativ zu und insbesondere auf einer Nabenachse drehbar gelagertes Nabengehäuse und einen mit wenigstens zwei Rotorlagern gegenüber und insbesondere auf der Nabenachse drehbar gelagerten und besonders bevorzugt in axialer Richtung im Betrieb fest bzw. axial unbeweglich angeordneten Rotor, der zur drehfesten Anordnung wenigstens eines Ritzels oder eines Ritzelpaketes geeignet ist. Weiterhin ist eine Freilaufeinrichtung mit zwei miteinander zusammenwirkenden Freilaufkomponenten umfasst, wobei die Freilaufeinrichtung eine nabenseitige Freilaufkomponente und eine rotorseitige Freilaufkomponente umfasst. Die beiden Freilaufkomponenten sind in axialer Richtung relativ zueinander wenigstens zwischen einer Freilaufstellung und einer ineinander eingreifenden Eingriffsstellung bewegbar, wobei in der Freilaufstellung ein Antriebsdrehmoment übertragbar ist. Wobei der Rotor und auch das Nabengehäuse in der Freilaufstellung und in der Eingriffsstellung in den gleichen axialen Positionen angeordnet sind. Die nabenseitige Freilaufkomponente ist kompakt bauend ausgebildet und darin ist ein Nabenlager zur drehbaren Lagerung des Nabengehäuses integriert und ausgebildet. Ein Außenring des Nabenlagers ist in einem axialen Körperabschnitt der nabenseitigen Freilaufkomponente ausgebildet. Wenigstens eine Dichteinheit schützt das Innere des Nabenlagers vor dem Eintritt von Fremdkörpern und insbesondere vor Schadstoffen wie z. B. Schmutz und Staub und Wasser.

Die erfindungsgemäße Nabe hat viele Vorteile. Insbesondere ermöglicht die erfindungsgemäße Nabe einen noch steiferen Aufbau, da der seitliche axiale Abstand der Wälzlager zu Lagerung des Nabengehäuses erheblich größer gewählt werden kann, als dies im Stand der Technik bei Zahnscheibenfreiläufen der Fall war. Dadurch, dass an der nabenseitigen Freilaufkomponente ein Wälzlager zur drehbaren Lagerung des Nabengehäuses ausgebildet ist, kann die insgesamt benötigte axiale Breite für das Wälzlager und die Freilaufkomponente deutlich reduziert werden, sodass das Nabengehäuse insgesamt deutlich breiter abgestützt wird, wodurch die Seitensteifigkeit eines damit ausgerüsteten Rades erheblich verbessert werden kann. Die Nabe ist auch sehr zuverlässig, da das Nabenlager über wenigstens eine Dichteinheit verfügt. Es ist nicht nur eine Dichtung am Nabengehäuse z. B. zwischen Rotor und Nabengehäuse vorgesehen, sondern auch eine separate Dichteinheit direkt an dem Nabenlager, sodass eine hohe Verfügbarkeit und Lebensdauer erreicht werden kann.

Vorzugsweise ist zwischen dem Innenring und dem Außenring des Freilauflagers eine Dichteinheit angeordnet. Besonders bevorzugt ist zwischen dem Innenring und einem mit dem axialen Körperabschnitt verbundenen Ringflansch eine Dichteinheit angeordnet, um das Innere des Freilauflagers vor dem Eintritt von Fremdkörpern zu schützen. Bevorzugt ist jeweils wenigstens eine Dichteinheit an jedem axialen Ende.

Die nabenseitige Freilaufkomponente ist insbesondere ein separates Teil und ist nicht einstückig mit dem Nabengehäuse ausgebildet, da ein Nabengehäuse meist aus einer oder mehreren Komponenten aus einem leichteren Material oder aus mehreren leichten Materialien wie Leichtmetall oder Faserverbundwerkstoff besteht, während die Freilaufkomponente aus einem festeren und somit meist schwereren Material gefertigt ist. Beispielsweise eignet sich Stahl als Material für die Freilaufkomponente.

Insbesondere ist das Nabengehäuse über zwei (oder mehr) als Wälzlager ausgeführte Nabenlager gegenüber der Nabenachse drehbar gelagert. Die beiden Nabenlager sind vorzugsweise an gegenüberliegenden Endbereichen des Nabengehäuses angeordnet. Die Nabenlager zur Lagerung des Nabengehäuses gegenüber der Nabenachse können auch als Nabengehäuselager bezeichnet werden. Eines der Nabenlager ist in die Freilaufkomponente integriert. Es ist auch möglich, auf wenigstens einer Seite bzw. in wenigstens einem Endbereich des Nabengehäuses zwei benachbarte Nabenlager einzusetzen, um das Nabengehäuse auf der Nabenachse drehbar zu lagern. Es können auch an jedem Ende des Nabengehäuses jeweils zwei Nabenlager vorhanden sein. An der nabenseitigen Freilaufkomponente sind dann zwei (unmittelbar oder mittelbar) benachbarte Nabenlager ausgebildet, wobei der axiale Körperabschnitt Laufflächen für jeweils zwei Gruppen von Wälzkörpern zur Verfügung stellt. Besonders bevorzugt ist in der nabenseitigen Freilaufkomponente nur ein Wälzlager ausgebildet und darin integriert.

Dadurch, dass eines der Nabenlager zur drehbaren Lagerung des Nabengehäuses an der nabenseitigen Freilaufkomponente ausgebildet ist, kann der seitliche Abstand der Nabenlager zu Lagerung des Nabengehäuses seitlich um mehrere Millimeter vergrößert werden. Schon dadurch wird eine erheblich höhere Steifigkeit der Nabe erzielt. Ein beim Treten wirksames Biegemoment wird erheblich verringert. Der seitliche axiale Abstand zwischen der Kraftangriffsfläche zur Übertragung des Antriebsmoments und der Lagerstelle ist erheblich geringer als im Stand der Technik, da das Nabenlager direkt innerhalb der nabenseitigen Freilaufkomponente ausgebildet ist und somit auch als Freilauflager bezeichnet werden kann. Der Abstand kann gegenüber dem Stand der Technik sogar halbiert werden. Außerdem kann der seitliche axiale Abstand der Nabenlager zu Lagerung des Nabengehäuses deutlich vergrößert werden.

Ein weiterer Vorteil ist, dass auch der Abstand der beiden Rotorlager zueinander vergrößert werden kann, sodass auch dort eine größere Steifigkeit erzielt wird. Sehr vorteilhaft ist es auch, dass die Nabe noch einfacher aufgebaut ist. Auch die Rotorlager sind vorzugsweise als Wälzlager ausgeführt.

Gleichzeitig kann mit der Erfindung die Nabe insgesamt deutlich leichter aufgebaut werden. Ein Gewichtsvorteil wird dadurch erzielt, dass die nabenseitige Freilaufkomponente konstruktiv bedingt noch leichter ausgestaltet wird. Ein weiterer Gewichtsvorteil wird dadurch erreicht, dass die Nabenhülse dünnwandiger ausgebildet werden kann. Beim bekannten Stand der Technik umgibt das Nabengehäuse das Wälzlager und die benachbart dazu in dem Nabengehäuse aufgenommene Zahnscheibe. Zur Sicherstellung der nötigen Stabilität darf eine minimale Wandstärke des Nabengehäuses aber nicht unterschritten werden. Das führt dazu, dass beim bekannten Stand der Technik das Nabengehäuse über einen deutlich größeren axialen Bereich eine erheblich größere Wandstärke aufweisen muss, als dies bei der vorliegenden Erfindung der Fall ist. Mit der Erfindung wird also eine größere Steifigkeit bei einem kleineren Gewicht erreicht. Zusätzlich werden auch noch weniger Teile benötigt, sodass der Aufbau und die Montage und die Wartung einfacher werden.

Mit der Erfindung wird axialer Bauraum eingespart. Sowohl das Nabengehäuse als auch der Rotor können jeweils axial breiter abgestützt werden, als es bei dem aus der EP 1 121 255 B1 bekannten Stand der Technik der Fall war.

Bei der Erfindung ist an der nabenseitigen Freilaufkomponente ein Nabenlager zur drehbaren Lagerung des Nabengehäuses ausgebildet, um die Nabe zu versteifen und eine Erhöhung eines axialen Abstandes der Nabenlager des Nabengehäuses zu ermöglichen.

In allen Ausgestaltungen übertragen die Freilaufkomponenten in der Eingriffsstellung eine Drehbewegung in Antriebsrichtung von dem Rotor auf den Nabenkörper. In der Freilaufstellung ist eine Relativdrehung der Freilaufkomponenten zueinander und damit auch des Nabenkörpers zu dem Rotor möglich.

In einer bevorzugten Weiterbildung werden die beiden Freilaufkomponenten über wenigstens eine Vorbelastungseinrichtung in die Eingriffsstellung vorbelastet. Die Freilaufkomponenten weisen vorzugsweise jeweils stirnseitig ausgebildete Eingriffselemente auf, welche in der Eingriffsstellung ineinander eingreifen. Dadurch übertragen die Freilaufkomponenten in der Eingriffsstellung eine Drehbewegung in Antriebsrichtung von dem Rotor auf das Nabengehäuse. In der Freilaufstellung ist eine Relativdrehung der Freilaufkomponenten zueinander und damit auch des Nabengehäuses zu dem Rotor entgegen der Antriebsdrehrichtung möglich.

In allen Ausgestaltungen ist es bevorzugt, dass die Freilaufkomponenten jeweils eine Axialverzahnung aufweisen. Die Freilaufeinrichtung ist insbesondere als Zahnscheibenfreilauf ausgebildet. Als Eingriffselemente dienen dann vorzugsweise Axialzähne, die insbesondere über wenigstens eine Feder oder eine Mehrzahl von Federn oder Federelementen in die Eingriffsstellung vorbelastet werden. Insbesondere beträgt die Anzahl der Eingriffselemente an jeder Freilaufkomponente zwischen 16 und 80 und insbesondere zwischen 18 und 72. Damit wird ein sehr schnelles Ansprechen ermöglicht.

Vorzugsweise ist der axiale Körperabschnitt mit einem Ringflansch verbunden, an dem stirnseitig eine Axialverzahnung ausgebildet ist, die mit einer Axialverzahnung an der rotorseitigen Freilaufkomponente zusammenwirkt. Die Axialverzahnungen weisen vorzugsweise Eingriffselemente (axial außen) auf.

In bevorzugten Ausgestaltungen weist das an der nabenseitigen Freilaufkomponente ausgebildete Wälzlager einen Außenring und einen Innenring und zwischen dem Außenring und dem Innenring angeordnete Wälzkörper auf. Dabei bildet der Außenring die äußere Lauffläche für die Wälzkörper und ist an dem axialen Körperabschnitt der nabenseitigen Freilaufkomponente ausgebildet. Das bedeutet, dass der Außenring nicht als separates Bauteil in die nabenseitige Freilaufkomponente eingesetzt ist, sondern direkt einstückig oder sogar werkstoffeinstückig in der nabenseitigen Freilaufkomponente ausgebildet ist. Der Außenring ist dabei fest und untrennbar mit dem axialen Körperabschnitt der nabenseitigen Freilaufkomponente verbunden. Die Lauffläche für die Wälzkörper kann gehärtet sein.

Vorzugsweise weist das in der nabenseitigen Freilaufkomponente ausgebildete Nabenlager in Wälzkörperkäfigen angeordnete Wälzkörper auf.

In allen Ausgestaltungen ist es bevorzugt, dass wenigstens eines der Wälzlager als Kugellager ausgebildet ist und in dem Außenring eine Führung für die Wälzkörper aufweist. Vorzugsweise ist in dem in der nabenseitigen Freilaufkomponente ausgebildeten Nabenlager direkt in der Freilaufkomponente eine Führung und insbesondere eine Führungsrille für die Wälzkörper ausgebildet.

In allen Ausgestaltungen ist es bevorzugt, dass die rotorseitige Freilaufkomponente drehfest und axial beweglich an dem Rotor aufgenommen ist und dass die nabenseitige Freilaufkomponente drehfest und insbesondere auch axial fest mit dem Nabengehäuse gekoppelt ist. Insbesondere kann die rotorseitige Freilaufkomponente als Zahnscheibe ausgebildet sein oder eine solche umfassen. Die rotorseitige Freilaufkomponente ist vorzugsweise stirnseitig mit einer Axialverzahnung versehen.

In bevorzugten Ausgestaltungen weist der axiale Körperabschnitt einen runden Außenquerschnitt auf und ist insbesondere rohrförmig gestaltet. Insbesondere ist dann an dem runden Außenquerschnitt ein Außengewinde vorgesehen, mit welchem der axiale Körperabschnitt im montierten Zustand in ein Innengewinde des Nabengehäuses eingeschraubt ist.

Es ist aber auch möglich und bevorzugt, dass der axiale Körperabschnitt einen unrunden Außenquerschnitt aufweist. Beispielsweise kann der axiale Körperabschnitt einen mehreckigen Außenquerschnitt aufweisen. Der (unrunde) Außenquerschnitt des axialen Körperabschnitts ist dann insbesondere angepasst an einen entsprechenden unrunden Innenquerschnitt des Nabengehäuses. Möglich sind auch zahnartige Strukturen (Außen- und Innenverzahnung), wobei eine axiale Fixierung des axialen Körperabschnitts an dem Nabengehäuse bevorzugt ist. Die axiale Position kann sich auch über die axial definierte Positionierung des Innenrings des Nabengehäuselagers an bzw. in der nabenseitigen Freilaufkomponente ergeben.

Möglich ist es auch, dass der axiale Körperabschnitt einen runden oder unrunden Außenquerschnitt umfasst und nicht über einen äußeren Umfangsformschluss drehfest mit dem Nabengehäuse gekoppelt ist. Beispielsweise können auch Kopplungsstifte oder Kopplungsschrauben vorgesehen sein, die die nabenseitige Freilaufkomponente drehfest und gegebenenfalls auch axial fest mit dem Nabengehäuse verbinden.

In einfachen Ausgestaltungen ist der axiale Körperabschnitt mit einem Außengewinde ausgerüstet und ist im montierten Zustand in ein Innengewinde des Nabengehäuses eingeschraubt. Die nabenseitige Freilaufkomponente ist darüber axial fest und drehfest mit dem Nabengehäuse verbunden. Der axiale Körperabschnitt kann auch als rohrförmiger Körperabschnitt bezeichnet werden und ist in solchen Weiterbildungen vorzugsweise im Wesentlichen zylindrisch ausgebildet. Im Inneren dient der axiale Körperabschnitt vorzugsweise als Außenring des in der nabenseitigen Freilaufkomponente ausgebildeten Wälzlagers.

Die nabenseitige Freilaufkomponente weist in einem Radialschnitt einen vorzugsweise im Wesentlichen L-förmigen Querschnitt auf, wobei ein Schenkel des "L" den (umlaufenden) axialen und hier rohrförmigen Körperabschnitt bildet und sich der andere Schenkel des "L" in radialer Richtung erstreckt und mit den Eingriffselementen ausgerüstet ist.

Vorzugsweise ist das in der nabenseitigen Freilaufkomponente ausgebildete Wälzlager vollständig innerhalb der nabenseitigen Freilaufkomponente ausgebildet bzw. wird radial vollständig davon umgeben.

In bevorzugten Ausgestaltungen und Weiterbildungen weist die nabenseitige Freilaufkomponente einen radial nach außen ragenden Fortsatz auf, der radial insbesondere über den axialen Körperabschnitt nach außen übersteht und der im montierten Zustand vorzugsweise an einem radialen Absatz des Nabengehäuses anliegt. Dadurch wird eine axial definierte Position der nabenseitigen Freilaufkomponente und somit des darin ausgebildeten Wälzlagers erreicht. Der nach außen ragende Fortsatz kann als singulärer Fortsatz ausgebildet sein oder es sind mehrere Fortsätze (symmetrisch) über dem Umfang verteilt vorgesehen. Der Fortsatz kann auch als umlaufender Flansch ausgebildet sein, der sich insbesondere von dem axial äußeren Ende des axialen Körperabschnitts aus radial nach außen erstreckt.

Der Ringflansch erstreckt sich insbesondere am axial äußeren Ende des axialen Körperabschnitts radial nach innen hin. Dann bildet der Ringflansch den radialen Schenkel des L, wie es zuvor beschrieben wurde. Insbesondere weist der Ringflansch stirnseitig eine Axialverzahnung auf.

Vorzugsweise weist das an der nabenseitigen Freilaufkomponente ausgebildete Wälzlager wenigstens eine Dichteinheit zwischen dem Innenring und dem Außenring auf. Besonders bevorzugt umfasst das an der nabenseitigen Freilaufkomponente ausgebildete Wälzlager einen ringförmigen Dichtring zwischen dem Ringflansch und dem Innenring als Dichteinheit.

Es ist auch möglich, dass die Dichteinheit wenigstens einen (berührungsfreien) radialen Flansch oder einen Doppelflansch umfasst.

Vorzugsweise ist eine Dichteinheit zwischen einem Innenring des Nabenlagers und dem Ringflansch angeordnet. Zwischen dem Innenring des Nabenlagers an der nabenseitigen Freilaufkomponente und dem Ringflansch (auf der axial äußeren Seite) ist vorzugsweise ein Spalt ausgebildet, der kleiner ist, als ein Abstand zwischen dem Innenring und dem Außenring an der axial inneren Seite (bezüglich der Nabe) des an der nabenseitigen Freilaufkomponente ausgebildeten Nabenlagers. Ein Verhältnis von dem Spalt zu dem Abstand ist insbesondere kleiner als 1:2 und vorzugsweise kleiner als 1:4 und besonders bevorzugt kleiner als 1:5. Der Spalt ist insbesondere kleiner als 2 mm und vorzugsweise kleiner als 1 mm. Der Spalt ist insbesondere kleiner als 1/3 und vorzugsweise als 1/4 und besonders bevorzugt als 1/5 des Durchmessers der Wälzkörper. Der Spalt kann auch kleiner als 1/6 oder 1/7 des Durchmessers der Wälzkörper sein. Der Spalt ist vorzugsweise kleiner als 1/6 und insbesondere 1/8 oder 1/10 der axialen Breite des Innenrings.

Vorzugsweise umfasst die Dichteinheit wenigstens einen in einer Dichtnut angeordneten Dichtring zwischen dem Ringflansch und dem Innenring. Die oder eine Dichtnut kann in dem Ringflansch ausgebildet sein. Die oder eine weitere Dichtnut kann auch in dem Innenring ausgebildet sein.

An dem Ringflansch und insbesondere an dem radial inneren Ende des Ringflansches ist insbesondere eine umlaufende Nut als Dichtnut ausgebildet, in der eine Dichteinheit und insbesondere ein Dichtring angeordnet ist. Der Dichtring dichtet das Nabenlager in axialer Richtung axial nach außen ab und ist in der Dichtnut aufgenommen und weist einen Außendurchmesser auf, der an die Tiefe der Dichtnut und die Größe des Spaltes angepasst ist. Vorzugsweise liegt der Dichtring berührend an der Dichtnut und an dem Innenring an. Auf der axial inneren Seite ist vorzugsweise eine weitere Dichteinheit angeordnet, die den dort größeren Abstand zwischen dem Innenring und dem Außenring bzw. dem axialen Körperabschnitt abdichtet. Insbesondere ist diese Dichteinheit als Elastomerdichtung ausgeführt und dichtet berührend ab.

Vorzugsweise beträgt ein Verhältnis von maximaler axialer Breite der nabenseitigen Freilaufkomponente mit integriertem Nabenlager zu einer radialen Erstreckung der nabenseitigen Freilaufkomponente von dem Innenring bis zum radial äußersten Punkt (der nabenseitigen Freilaufkomponente) zwischen 0,8 und 1,5. Insbesondere liegt dieses Verhältnis zwischen 1 und 1,4 und kann in konkreten Ausgestaltungen zwischen 1,1 und 1,2 oder 1,3 und z. B. 1,15 +/- 0,02 betragen.

In vorteilhaften Ausgestaltungen beträgt ein Verhältnis einer axialen Breite der nabenseitigen Freilaufkomponente zu einer axialen Breite des Innenrings des in die nabenseitige Freilaufkomponente integrierten Nabenlagers zwischen 1 und 1,5. In bevorzugten Ausgestaltungen liegt dieses Verhältnis zwischen 1,1 und 1,3 und kann konkret bei etwa 1,22 +/- 5% liegen.

Bevorzugter Weise beträgt ein Verhältnis einer axialen Breite der nabenseitigen Freilaufkomponente zu einem Durchmesser eines Wälzkörpers des in die nabenseitige Freilaufkomponente integrierten Nabenlagers zwischen 2:1 und 3:1 und kann insbesondere zwischen 2,25 und 2,75 liegen und kann konkret 2,45 +/- 0,05 betragen.

Es ist bevorzugt, dass ein Verhältnis einer radialen Abmessung der nabenseitigen Freilaufkomponente von dem Innenring bis zur Außenfläche des axialen Körperabschnitts zu einem Durchmesser eines Wälzkörpers zwischen 2,5 und 1,5 beträgt. In bevorzugten Ausgestaltungen liegt das Verhältnis zwischen 1,75 und 2,25 und kann konkret bei 1,85 +/- 0,05 liegen.

Alle diese zuvor angegebenen Parameter definieren eine kompakt bauende Nabe und eine klein bauende nabenseitige Freilaufkomponente. Die nabenseitige Freilaufkomponente mit dem darin integrierten Nabenlager ist äußerst kompakt aufgebaut und ermöglicht ein besonders leichtes Gewicht der gesamten Nabe. Dabei wird die Funktionssicherheit und die Lebensdauer erhöht. Diese Funktionalität kann durch die angegebenen Verhältnisse, Werte und Wertebereiche definiert werden.

Vorzugsweise ist in dem Nabengehäuse ein radialer Absatz ausgebildet, die einen geringen axialen Abstand zu dem axial inneren Ende des axialen Körperabschnitts der nabenseitigen Freilaufkomponente aufweist. Dadurch wird sichergestellt, dass die nabenseitige Freilaufkomponente in axialer Richtung durch den an dem axial weiter außen ausgebildeten radialen Absatz definiert wird, an dem der Fortsatz anliegt. Eine nachteilige Überbestimmung wird verhindert.

In vorteilhaften Ausgestaltungen ist die Vorbelastungseinrichtung in der rotorseitigen Freilaufkomponente aufgenommen. Insbesondere wird die Vorbelastungseinrichtung im Wesentlichen vollständig und besonders bevorzugt vollständig innerhalb der rotorseitigen Freilaufkomponente aufgenommen. Das bietet erhebliche axiale Bauraumvorteile, da die rotorseitige Freilaufkomponente in axialer Richtung nicht oder nur sehr wenig aufbaut, sodass axialer Bauraum eingespart werden kann. Dadurch kann die Steifigkeit der Nabe nochmals erhöht werden.

Insbesondere umfasst die rotorseitige Freilaufkomponente einen (zylindrischen) Führungsabschnitt mit einer unrunden Außenkontur, welcher mit einer angepassten unrunden Innenkontur in dem Rotor kämmt, um eine axiale Bewegbarkeit der rotorseitigen Freilaufkomponente relativ zu dem Rotor zu ermöglichen, und um die drehfeste Kopplung zwischen dem Rotor und der rotorseitigen Freilaufkomponente bereitzustellen.

In bevorzugten Ausgestaltungen ist das stirnseitige Ende der rotorseitigen Freilaufkomponente vorzugsweise als Ringscheibe mit den daran angeordneten Eingriffselementen ausgebildet.

Vorzugsweise weist die rotorseitige Freilaufkomponente mit dem Führungsabschnitt und der am stirnseitigen Ende angeordneten Ringscheibe einen in radialer Richtung etwa L-förmigen Querschnitt auf. Ein axial ausgerichteter Schenkel wird durch den Führungsabschnitt gebildet. Ein (teilweise oder im Wesentlichen oder vollständig) radial ausgerichteter Schenkel wird durch die stirnseitige Ringscheibe gebildet.

Vorzugsweise drückt die Vorbelastungseinrichtung die stirnseitige Ringscheibe mit den Eingriffselementen in Richtung der nabenseitigen Eingriffkomponente. Dabei liegt die Vorbelastungseinrichtung vorzugsweise innen an der Ringscheibe an.

Die Ringscheibe und der (zylindrische) Führungsabschnitt bilden vorzugsweise im Wesentlichen die rotorseitige Freilaufkomponente. Der Führungsabschnitt und die Ringscheibe sind besonders bevorzugt einstückig gefertigt.

Besonders bevorzugt stützt sich die Vorbelastungseinrichtung axial nach außen (unmittelbar) an einem Rotorlager zur drehbaren Lagerung des Rotors ab. Dabei stützt sich die Vorbelastungseinrichtung besonders bevorzugt direkt und unmittelbar an einem äußeren Lagerring (auch Außenring genannt) des Rotorlagers ab.

In allen Ausgestaltungen sind die Lager zur Lagerung des Nabengehäuses und die Rotorlager zur Lagerung des Rotors vorzugsweise als Wälzlager und insbesondere als Rillenkugellager ausgeführt, die einen äußeren Lagerring, einen inneren Lagerring (auch Innenring genannt) und dazwischen insbesondere in einem Wälzkörperkäfig angeordnete Wälzkörper aufweisen.

Die Vorbelastungseinrichtung kann sich auch mittelbar an einem Rotorlager abstützen, wenn beispielsweise eine Scheibe zwischen dem Rotorlager und der Vorbelastungseinrichtung angeordnet wird. Einen besonders platzsparenden Aufbau ermöglicht die unmittelbare Abstützung der Vorbelastungseinrichtung an dem Rotorlager, jedenfalls, wenn die Vorbelastungseinrichtung als zylindrische Spiralfeder ausgebildet ist. In anderen Ausgestaltungen ist es z. B. auch möglich, mehrere einzelne Federn einzusetzen, die sich dann jeweils außen an dem Rotorlager oder an anderen Komponenten abstützen.

Vorzugsweise ist zwischen dem Rotor und dem Nabengehäuse eine Dichteinrichtung vorgesehen. Die Dichteinrichtung weist insbesondere wenigstens einen berührungsfreien Labyrinthspalt auf, der wenigstens einmal umgelenkt wird. Des Weiteren umfasst die Dichteinrichtung vorzugsweise wenigstens eine berührende Dichtlippe, die insbesondere dem Labyrinthspalt nachgeordnet ist. Die Dichteinrichtung verhindert insbesondere den Zutritt von Wasser und Staub zu der Freilaufeinrichtung möglichst weitgehend und insbesondere weitestgehend. Die Dichtlippe ist dabei vorzugsweise radial weiter innen als der Labyrinthspalt vorgesehen.

In allen Ausgestaltungen ist es besonders bevorzugt, dass der Rotor und vorzugsweise die gesamte Nabe vollständig (oder doch weitestgehend) werkzeugfrei demontierbar ist bzw. sind. Das Nabengehäuse ist vorzugsweise gesteckt. Die Endanschläge sind insbesondere angesteckt, d. h. eingesteckt oder vorzugsweise auf die Nabenachse aufgesteckt. Die Nabe ist vorzugsweise vollständig werkzeugfrei demontierbar. Gegebenenfalls benötigt man für die Demontage der nabenseitigen Freilaufkomponente ein geeignetes Werkzeug. Aber auch die nabenseitige Freilaufkomponente kann werkzeugfrei demontierbar sein. In allen Ausgestaltungen wird die Montage und Demontage und damit auch eine Wartung oder Reparatur erleichtert.

Vorzugsweise wird im montierten Zustand eine Einspannkraft der Nabe über die Innenringe der Wälzlager des Nabengehäuses und die Innenringe der Rotorlager abgestützt. Insbesondere ist zwischen dem freilaufseitigen Wälzlager des Nabengehäuses und dem freilaufseitigen Rotorlager und es ist zwischen den beiden Rotorlagern jeweils wenigstens ein Hülsenkörper zur formschlüssigen Kraftübertragung der Einspannkraft angeordnet. Dadurch wird eine die Einspannkraft formschlüssig übertragende und besonders stabile Nabe bereitgestellt.

Vorzugsweise liegen die an den gegenüberliegenden Endbereichen des Nabengehäuses angeordneten Wälzlager jeweils mit ihrem Innenring axial nach innen hin an radialen Verdickungen der Nabenachse an. Dadurch wird die Nabenachse zur formschlüssigen Kraftübertragung der Einspannkraft eingesetzt. Besonders bevorzugt ist die Nabenachse zylindrisch ausgestaltet und weist abgesehen von den radialen Verdickungen, an denen die Wälzlager zur Lagerung des Nabengehäuses anliegen, einen im Wesentlichen konstanten Durchmesser und eine im wesentliche konstante Wandstärke auf, wobei der Durchmesser und die Wandstärke sich um weniger als 25% und vorzugsweise um weniger als 15% ändern. Im Inneren ist die Nabenachse besonders bevorzugt zylindrisch ausgebildet.

Besonders bevorzugt ist wenigstens eines der Wälzlager und/oder der Rotorlager als Rillenkugellager ausgebildet. Insbesondere ist wenigstens eines der Wälzlager (abgesehen von dem in der Freilaufkomponente ausgebildeten Wälzlager) als handelsübliches und/oder normiertes Rillenkugellager ausgebildet. Insbesondere ist der Innenring des in der nabenseitigen Freilaufkomponente ausgebildeten Wälzlagers mit derartigen Abmessungen versehen, wie es die Innenringe von handelsüblichen und/oder normierten Rillenkugelkugellagern aufweisen. Wenigstens eines der Wälzlager und/oder der Rotorlager verfügt vorzugsweise über einen Wälzkörperkäfig und/oder über Lagerdichtungen, die direkt an dem Wälzlager angebracht sind und den Eintritt von Wasser und/oder Staub zum Inneren des Wälzlagers verhindern.

Vorzugsweise weist wenigstens eines der Wälzlager einen Wälzkörperkäfig auf, an dem die Wälzkörper angeordnet sind.

In allen Ausgestaltungen ist es besonders bevorzugt, dass die Nabe für den Einsatz einer Steckachse ausgebildet ist. Vorzugsweise umfasst die Nabe eine Steckachse.

Es ist bevorzugt, dass Endanschläge vorgesehen sind, die auf die Achse (auch Nabenachse genannt) aufgeschoben sind oder die in die Achse bzw. Nabenachse eingeschoben werden. Es ist möglich und bevorzugt, austauschbare Endanschläge zur Verfügung zu stellen, wobei ein Satz von Endanschlägen zur Aufnahme einer Steckachse ausgebildet ist und wobei ein anderer Satz von Endanschlägen zur Aufnahme beispielsweise eines Schnellspanners vorgesehen ist. Der letztere Satz von Endanschlägen weist axial nach außen hin zylindrische Ansätze auf, die zur Aufnahme in den Ausfallenden eines Rahmens ausgebildet sind und die vorzugsweise an den zylindrischen Ansätzen einen kleineren Außendurchmesser aufweisen als ein Innendurchmesser der Nabenachse in einem zentralen Bereich der Nabenachse. Werden zwei Sätze von Endanschlägen mit der Nabe ausgeliefert, kann sich der Benutzer entscheiden, ob er sie mit der Steckachse oder mit einem Schnellspanner verwenden will. Auch eine nachträgliche Umrüstung ist möglich.

In allen Ausgestaltungen können auch mehr als zwei Wälzlager zur Lagerung des Nabengehäuses vorgesehen sein. Jedenfalls wird dann jeweils (wenigstens) ein Wälzlager an den beiden Endbereichen angeordnet. Ebenso können auch mehr als zwei Rotorlager eingesetzt werden.

In
der Eingriffsstellung ist ein Antriebsdrehmoment von dem Rotor auf das Nabengehäuse übertragbar. In der Freilaufstellung sind der Rotor und das Nabengehäuse voneinander entkoppelt. Das bedeutet, dass in der Freilaufstellung kein oder praktisch kein wesentliches Drehmoment zwischen Nabengehäuse und Rotor übertragen wird.

Vorzugsweise weist die nabenseitige Freilaufkomponente einen von dem axialen Körperabschnitt nach außen ragenden Fortsatz und einen nach innen ragenden Ringflansch auf. An der axialen Außenseite (bezüglich der Nabe) des Ringflansches sind die Eingriffselemente ausgebildet und an der axialen Innenseite des Fortsatzes ist ein Anschlag ausgebildet, der vorzugsweise im montierten Zustand an einem radialen Absatz des Nabengehäuses anliegt. Dadurch wird auch bei einem Einschrauben der nabenseitige Freilaufkomponente eine ausreichend stabile Abstützung im Nabengehäuse erzielt. Bei einer solchen Gestaltung wird zuverlässig verhindert, dass sich die nabenseitige Freilaufkomponente im Betrieb immer weiter in das Nabengehäuse hineinzieht. Besonders bevorzugt liegt ein (in axialer Richtung gesehen) lichter Abstand zwischen der axial inneren Stirnseite des axialen Körperabschnitts und dem Nabengehäuse vor, während die axiale Innenseite des Fortsatzes mit dem Anschlag an dem radialen Absatz in dem Nabengehäuse anliegt.

In bevorzugten Weiterbildungen ist der axiale Körperabschnitt derart ausgestaltet, dass der axiale Körperabschnitt mit dem nach außen ragenden Fortsatz und dem nach innen ragenden Ringflansch einen (wenigstens im Wesentlichen) T-förmigen Querschnitt aufweist. Möglich ist auch ein S- oder Z-förmiger Querschnitt. Vorzugsweise sind bei einem T-förmigen Querschnitt der Querstrich des "T" und somit der Ringflansch und der Fortsatz axial außen angeordnet, während der axiale oder rohrförmige Körperabschnitt sich weiter nach innen in das Nabengehäuse bzw. in die Nabe hinein erstrecken. Eine solche Ausgestaltung und ein solcher z. B. T-förmiger Querschnitt erlaubt eine kompakte Bauweise und eine hohe Belastbarkeit. Die (in Bezug auf die Nabe) axiale Außenseite des Ringflansches ist mit den Eingriffselementen ausgerüstet. Die (in Bezug auf die Nabe) axiale Innenseite des Fortsatzes stellt einen Anschlag zur Verfügung, der (im montierten Zustand) an dem radialen Absatz in dem Nabengehäuse anliegt. Dadurch wird ein großes Materialvolumen in dem Nabengehäuse zur Verfügung gestellt, über welches die auf das Nabengehäuse wirkenden Kräfte zuverlässig übertragen werden, wodurch bei leichtem Gewicht eine stabile Nabe zur Verfügung gestellt werden kann.

Weitere Vorteile und Merkmale der vorliegenden Erfindung ergeben sich aus den Ausführungsbeispielen, welche im Folgenden mit Bezug auf die beiliegenden Figuren erläutert werden.

In den Figuren zeigen:
- Figur 1: eine schematische Darstellung eines Mountainbikes;
- Figur 2: eine schematische Darstellung eines Rennrades;
- Figur 3: einen Schnitt durch eine erfindungsgemäße Nabe;
- Figur 4: ein vergrößertes Detail des Schnittes aus Figur 3;
- Figur 5: eine perspektivische Darstellung der nabenseitigen Freilaufkomponente;
- Figur 6: einen Schnitt durch die nabenseitige Freilaufkomponente nach Figur 5;
- Figur 7: eine Explosionsdarstellung der Nabe nach Figur 3;
- Figur 8: einen Schnitt durch eine weitere erfindungsgemäße Nabe; und
- Figur 9: ein vergrößertes Detail des Schnittes aus Figur 8.

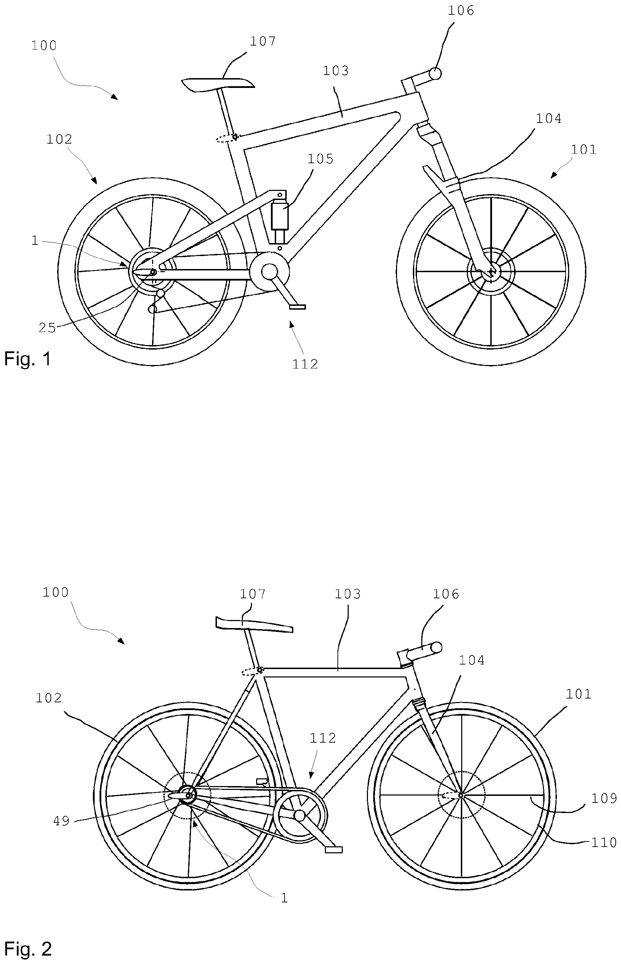

In den Figuren 1 und 2 sind jeweils ein Mountainbike bzw. ein Rennrad 100 dargestellt, die jeweils mit einer erfindungsgemäßen Nabe 1 ausgerüstet sind. Das Mountainbike bzw. Rennrad 100 verfügt jeweils über ein Vorderrad 101 und ein Hinterrad 102. An dem Hinterrad 102 wird die erfindungsgemäße Nabe 1 eingesetzt. Die beiden Räder 101, 102 verfügen über Speichen 109 und eine Felge 110. Es können kommerzielle Felgenbremsen oder auch andere Bremsen wie zum Beispiel Scheibenbremsen vorgesehen sein.

Ein Rad 100 verfügt über einen Rahmen 103, einen Lenker 106, einen Sattel 107, eine Gabel bzw. Federgabel 104 und im Falle des Mountainbikes kann ein Hinterraddämpfer 105 vorgesehen sein. Zum Antrieb dient eine Tretkurbel 112 mit Pedalen. Gegebenenfalls kann ein elektrischer Hilfsantrieb an der Tretkurbel 112 und/oder den Rädern vorgesehen sein. Die Nabe 1 der Räder kann jeweils über eine Steckachse 25 oder einen Schnellspanner 49 an dem Rahmen befestigt sein.

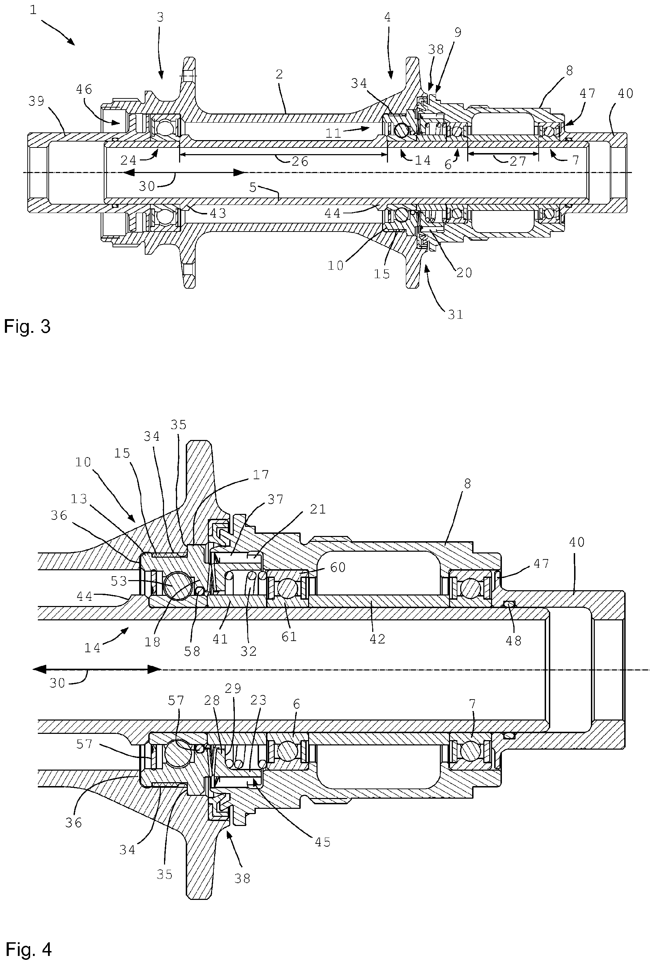

Die in den Fahrrädern gemäß Figur 1 und 2 jeweils am Hinterrad 102 eingesetzten Naben 1 zeigt Figur 3 in einem Schnitt.

Die erfindungsgemäße Nabe umfasst ein Nabengehäuse 2, welches in den axialen Endbereichen 3 und 4 jeweils über Wälzlager 24 bzw. 14 drehbar gegenüber und hier unmittelbar drehbar auf einer Nabenachse 5 gelagert ist. Das bedeutet, dass die Wälzlager 14, 24 jeweils direkt auf der Nabenachse 5 angeordnet sind.

Die Nabe umfasst des Weiteren einen Rotor 8, an dem wenigstens ein Ritzel anzuordnen ist. Insbesondere kann dort ein Ritzelpaket aufgeschoben und befestigt bzw. angeordnet werden. Zwischen dem Rotor 8 und dem Nabengehäuse 2 ist eine Freilaufeinrichtung 9 vorgesehen, die die nabenseitige Freilaufkomponente 10 und die rotorseitige Freilaufkomponente 20 umfasst. Um den Eintritt von Wasser und Staub in das Innere der Nabe 1 und insbesondere um den Zutritt von Wasser und Staub zu der Freilaufeinrichtung 9 zu vermeiden, ist zwischen dem Rotor 8 und dem Nabengehäuse 2 eine Dichteinrichtung 38 ausgebildet, die hier einen labyrinthartigen Dichtspalt und eine nachgeschaltete Lippendichtung umfasst, die berührend an dem Rotor anliegt und den Freilauf zuverlässig vor dem Eintritt von Schmutz und Wasser schützt.

An den beiden Enden sind Endanschläge 39 bzw. 40 auf die Nabenachse aufgeschoben, die - wenn das damit ausgerüstete Laufrad nicht im Rahmen eingespannt ist - über O-Ringe 48 auf der Nabenachse gesichert werden. An den Endanschlägen 39 und 40 ist jeweils ein Dichtflansch 46 bzw. 47 vorgesehen, die die Enden der Nabe 1 vor dem Eintritt von Schmutz und Wasser schützen. Hier ist an dem rotorseitigen Endanschlag 40 ein radialer Dichtflansch 47 vorgesehen, während am anderen Endanschlag 39 ein Doppelflansch 46 ausgebildet ist, der aus zwei radialen Dichtflanschen besteht, zwischen denen ein axialer Abstand und Freiraum ausgebildet ist.

Die Wälzlager 14, 24 zur drehbaren Lagerung des Nabengehäuses 2 stützen sich an radialen Absätzen in Verdickungen 43, 44 der Nabenachse 5 ab. Die Verdickungen 43 und 44 befinden sich jeweils axial nach innen von den Lagern 14, 24.

In allen Ausgestaltungen der Nabe 1 ist an den Verdickungen 43, 44 die radiale Wandstärke der Nabenachse 5 vorzugsweise etwas größer. Insbesondere beträgt die radiale Wandstärke dort zwischen etwa dem l,5fachen und dem 3fachen der radialen Wandstärke in den anderen Bereichen. Abgesehen von den Verdickungen 43, 44 ist die Nabenachse 5 im Wesentlichen hohlzylindrisch ausgebildet und weist Unterschiede in der Wandstärke vorzugsweise kleiner 25% und insbesondere kleiner 15% oder kleiner 10% oder kleiner 5% oder kleiner 2% auf. Vorzugsweise ist ein Verhältnis von maximalem Außendurchmesser der Nabenachse (inkl. Verdickung) zu minimalem Innendurchmesser der Nabenachse kleiner als 2,0 und insbesondere kleiner als 1,75 und vorzugsweise kleiner als 1,6. Vorzugsweise ist das Verhältnis von maximalem Außendurchmesser der Nabenachse zu minimalem Innendurchmesser der Nabenachse größer als 1,25 und insbesondere größer als 1,4.

Der Rotor 8 wird über zwei Rotorlager 6 und 7 drehbar (und unmittelbar) auf der Achse 5 abgestützt.

Das Wälzlager 14 ist an der nabenseitigen Freilaufkomponente 10 angeordnet und daran ausgebildet. Dadurch kann erheblicher axialer Bauraum eingespart werden, wodurch die Stabilität und Steifigkeit der Nabe vergrößert werden kann. Die Seitensteifigkeit wird erheblich verbessert. Außerdem wird das Gesamtgewicht der Nabe reduziert. Sowohl das Gewicht der einzelnen Freilaufkomponenten als auch das Gewicht des Nabengehäuses können reduziert werden, da die Wandstärke in dem rotorseitigen Endbereich 4 des Nabengehäuses 2 reduziert werden kann.

Die Freilaufkomponente 10 mit dem daran ausgebildeten Wälzlager 14 ist hier mit einem Außengewinde 15 versehen und in ein Innengewinde 34 des Nabengehäuses 2 eingeschraubt.

Im Vergleich zum Stand der Technik kann der axiale Abstand 26 zwischen den Innenringen der Wälzlager zu Lagerung des Nabengehäuses um mehr als 6 mm vergrößert werden. Der axiale Abstand 27 zwischen den Rotorlagern kann ebenfalls um mehr als 1 mm vergrößert werden, sodass die Belastbarkeit der Nabe 1 zunimmt und die Seitensteifigkeit erheblich vergrößert werden kann.

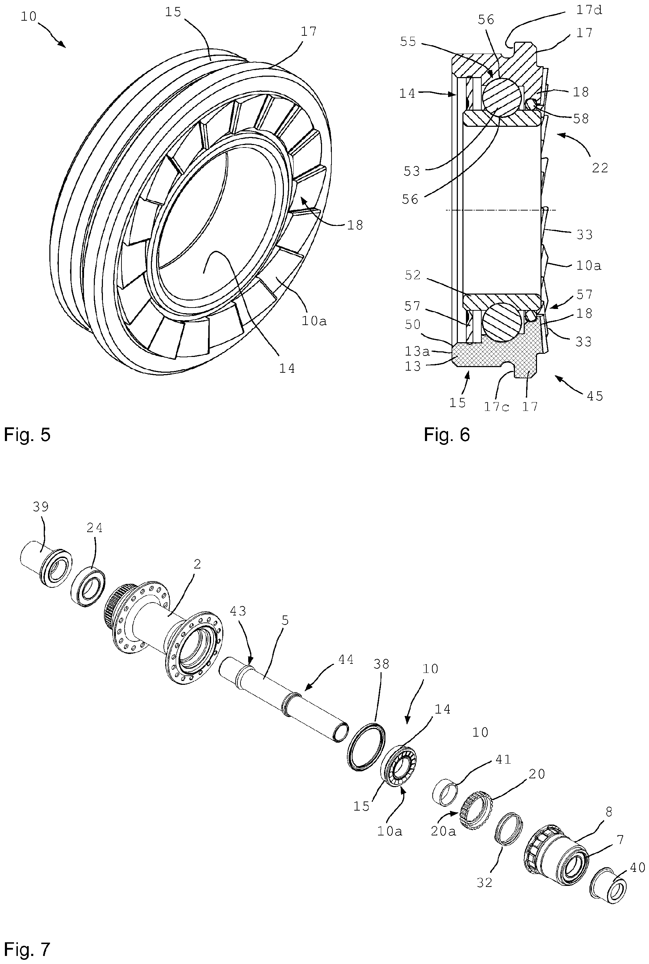

Figur 4 zeigt ein vergrößertes Detail aus Figur 3, wobei auch hier die Freilaufeinrichtung 9 in der Eingriffsstellung 31 dargestellt ist, in der die insbesondere als Axialverzahnungen ausgebildeten Eingriffselemente 33 (vgl. Fig. 6) der Freilaufkomponente 10 und der Eingriffkomponente 20 im drehfesten Eingriff miteinander stehen. Die Eingriffselemente 33 sind dabei derart ausgestaltet (vergleiche zum Beispiel Figur 5), dass bei einer Drehrichtung in Antriebsrichtung zuverlässig ein Drehmoment auf das Nabengehäuse 2 übertragen wird, während bei einer entgegengesetzten Drehrichtung die Freilaufkomponente 20 axial gegen die Vorbelastungskraft der Vorbelastungseinrichtung 32 nach außen gedrückt wird, bis die Eingriffselemente 33 außer Eingriff geraten, sodass eine Relativdrehung von Rotor zum Nabengehäuse möglich ist. Die rotorseitige Freilaufkomponente 20 verfügt über einen Führungsabschnitt 23 mit einer unrunden Außenkontur 21. Die unrunde Außenkontur 21 kämmt mit einer angepassten unrunden Innenkontur 37 in dem Rotor 8 und ist parallel zur axialen Richtung 30 in dem Rotor 8 axial verschiebbar.

Die Freilaufkomponente 10 umfasst das daran ausgebildete Wälzlager 14, welches einen Innenring 52 umfasst. Der Außenring 50 wird in dem Material der Freilaufkomponente 10 ausgebildet. Der Außenring 50 der Freilaufkomponente 10 weist hier im radialen Querschnitt eine etwa T-förmige Ausgestaltung auf, bei der ein axialer und hier etwa rohrförmiger Körperabschnitt 13 ausgebildet ist, der auf seiner Außenseite mit einem Außengewinde 15 versehen ist, während auf der radial inneren Umfangsfläche die Lauffläche 55 für die Wälzkörper 53 ausgebildet ist.

Am axial äußeren Ende der Freilaufkomponente 10 erstreckt sich radial nach außen ein (hier umlaufend ausgebildeter) Fortsatz 17, der einen Anschlag bildet und im montierten Zustand an einem radialen Absatz 35 in dem Nabengehäuse 2 anliegt und somit eine definierte axiale Ausrichtung der Freilaufkomponente 10 und des Wälzlagers 14 gewährleistet.

Am axial inneren Ende 13a der Freilaufkomponente 10 besteht ein geringer axialer Abstand zu dem radialen Absatz 36 in dem Nabengehäuse 2, um eine statische Überbestimmung zu verhindern. Der Außenring 50 des Wälzlagers 14 ist somit axial fest mit dem Nabengehäuse 2 verbunden.

Ebenso wird der Innenring 52 des Wälzlagers 14 axial fixiert aufgenommen.

Und zwar erfolgt der Kraftschluss in axialer Richtung 30 von dem Endanschlag 40 über den Innenring des Rotorlagers 7, den Hülsenkörper 42, den Innenring des Rotorlagers 6, den Hülsenkörper 41, den Innenring des Wälzlagers 14 und wird dann über die radiale Verdickung 44 in die Nabenachse eingeleitet und von dort über die radiale Verdickung 43 auf den Innenring des Wälzlagers 24 übertragen, von wo die Einspannkraft über den Endanschlag 39 schließlich wieder abgeleitet wird.

Das Wälzlager 14 verfügt vorzugsweise beidseitig über jeweils eine Dichteinheit 57 zur Abdichtung des Wälzlagers. Ebenso verfügt auch das andere Wälzlager 24 und es verfügen die Rotorlager 6 und 7 jeweils vorzugsweise über Dichteinheiten 57 zur jeweils beidseitigen Abdichtung.

Die Freilaufkomponente 10 weist an dem axial äußeren Ende stirnseitig einen Ringflansch 18 auf, der sich insbesondere von dem axialen Körperabschnitt 13 aus radial nach innen hin erstreckt. Auf der axialen Außenseite sind die Eingriffselemente 33 ausgebildet. In radialer Richtung verbleibt zwischen dem Innenring 52 des Wälzlagers 14 und der radialen Innenumfangsfläche des Ringflansches 18 ein relativ geringer radialer Spalt, in dem vorzugsweise ein Dichtring 58 als Dichteinheit 57 angeordnet ist. Die Flächen, an denen der Dichtring 58 anliegt, sind vorzugsweise geschliffen. Möglich ist es auch, einen Dichtflansch und eine Lippendichtung oder zwei Dichtflansche auszubilden, um den Zutritt von Wasser, Staub und Schmutz zu dem Inneren des Wälzlagers 14 zu verhindern.

Die rotorseitige Freilaufkomponente 20 weist an der Stirnseite 22 eine Ringscheibe 28 mit den dort ausgebildeten Eingriffselementen 33 auf. Die Ringscheibe 28 ist insbesondere einstückig mit einem zylindrischen Führungsabschnitt 23 der rotorseitigen Freilaufkomponente 20 ausgebildet. Im Inneren der Eingriffkomponente 20 drückt gegen die stirnseitige Innenfläche 9 20 vorzugsweise die insbesondere als Spiralfeder ausgebildete Vorbelastungseinrichtung 32, sodass die Eingriffkomponente 20 in die Eingriffstellung 31 vorbelastet wird. Die Spiralfeder 32 stützt sich am anderen Ende vorzugsweise an dem Außenring 60 des Rotorlagers 6 ab. Dadurch wird ein minimaler axialer Bauraum erzielt, wodurch die Steifigkeit und Stabilität der Nabe 1 insgesamt noch deutlich erhöht werden kann.

Ebenso ist auch der Ringflansch 18 einstückig mit dem axialen Körperabschnitt 13 an der nabenseitigen Freilaufkomponente 10 ausgebildet.

Wie in Figur 3 eingezeichnet ist, wird ein axialer Abstand 26 zwischen den Wälzlagern 14 und 24 zur drehbaren Lagerung des Nabengehäuses erzielt, der deutlich größer ist als dies im Stand der Technik war. Dadurch kann die Steifigkeit, Seitensteifigkeit und Stabilität der Nabe deutlich gesteigert werden. Durch die erhebliche Vergrößerung des axialen Abstands 26, der mehrere Millimeter und sogar 6 mm und mehr betragen kann, kann auf eine zweiseitig schwimmende axiale Lagerung der Freilaufkomponenten 10 und 20 verzichtet werden und dennoch eine größere Steifigkeit der Nabe bereitgestellt werden. Die Abnutzung der insbesondere als Zahnscheiben ausgeführten Freilaufkomponenten 10, 20 erfolgt gleichmäßig und eine sichere Funktion wird erreicht. Außerdem kann das Gewicht der Nabe 1 deutlich reduziert werden.

Figuren 5 und 6 zeigen die nabenseitige Freilaufkomponente 10 in einer perspektivischen Ansicht und in einem Schnitt. Dabei wird deutlich, dass die nabenseitige Freilaufkomponente einen besonders kompakten Aufbau erlaubt. Der ringförmige Fortsatz 17 ermöglicht der nabenseitigen Freilaufkomponente eine definierte axiale Positionierung in dem Nabengehäuse 2. Die Eingriffselemente 33 sind (axial außen) an dem Ringflansch 18 ausgebildet, der sich insbesondere von dem axialen Körperabschnitt 13 aus radial nach innen hin erstreckt. Gleichzeitig wird in der Freilaufkomponente ein Wälzlager ausgebildet und daran zur Verfügung gestellt, sodass ein äußerst kompakter axialer und radialer Bauraum erzielbar ist.

Wie Figur 6 zeigt, verfügt das Wälzlager über einen Außenring 50, der durch den bzw. in dem axialen Körperabschnitt 13 ausgebildet ist bzw. zur Verfügung gestellt wird. Auf der radial inneren Umfangsfläche des axialen Körperabschnitts 13 (Außenring 50) ist eine umlaufende Führungsrolle 56 zur Führung der Wälzkörper 53 ausgebildet. Dadurch wird hier ein Rillenkugellager zur Verfügung gestellt, welches neben Radialkräften auch Axialkräfte übertragen kann. In dem Innenring 52 ist auch eine entsprechende Führungsrille 56 ausgebildet. Auf beiden axialen Seiten sind Dichteinheiten 57 zur Abdichtung des Wälzlagers 14 vorgesehen, wobei die axial äußere Dichteinheit 57 hier als im Querschnitt kreisförmiger oder ovaler Dichtring 58 ausgebildet ist.

Figur 7 zeigt eine Darstellung wesentlicher Teile der erfindungsgemäßen Nabe 1 in einer Explosionsdarstellung. Links dargestellt ist der Endanschlag 39, der nach dem Einbau bzw. dem Einschieben des Wälzlagers 24 in die Nabenhülse 2 auf die Nabenachse 5 aufgesteckt werden kann. Die Nabenachse 5 weist radiale Verdickungen 43 und 44 auf. An dem gegenüberliegenden Ende 4 des Nabengehäuses 2 wird die Freilaufkomponente 10 mit dem Außengewinde 15 in ein Innengewinde 34 des Nabengehäuses 2 eingeschraubt. An der Freilaufkomponente 10 ist das Wälzlager 14 zur drehbaren Lagerung des Nabengehäuses 2 gegenüber der Nabenachse 5 ausgebildet. Die Dichteinrichtung 38 dichtet den Bereich zwischen Nabengehäuse 2 und Rotor 8 ab. Im Anschluss daran wird der Hülsenkörper 41 auf die Nabenachse 5 aufgeschoben.

In den Rotor 8 werden die Rotorlager 6 und 7 und dazwischen der Hülsenkörper 42 eingebracht. Des Weiteren werden in den Rotor die Vorbelastungseinrichtung 32 und die rotorseitige Freilaufkomponente 20 eingebracht und der Rotor 8 wird auf die Nabenachse 5 aufgeschoben. Schließlich wird der Endanschlag 40 aufgeschoben. Damit ist die Nabe montiert.

In entsprechender Weise ist eine Demontage und Wartung der Nabe 1 einfach und kann jederzeit manuell durchgeführt werden, um die Nabe nach dem Einsatz beispielsweise im Gelände oder nach einer längeren Straßenfahrt zu reinigen. Dadurch kann jederzeit eine zuverlässige Funktion sichergestellt werden.

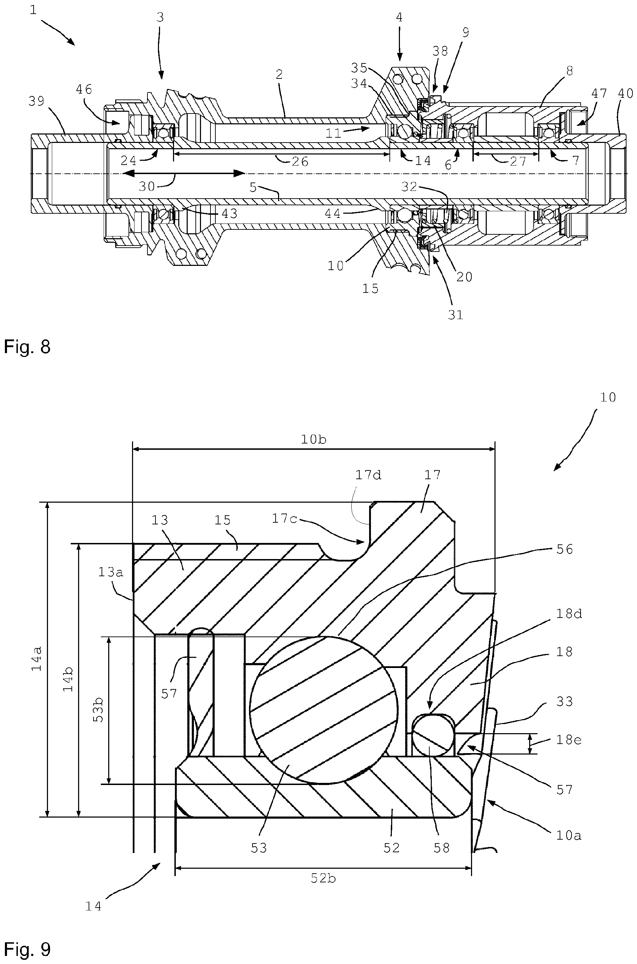

In den Figuren 8 und 9 ist ein leicht modifiziertes Ausführungsbeispiel abgebildet. Die Bezugszeichen sind gleich gewählt, sodass die Beschreibung des vorherigen Ausführungsbeispiels bis auf einige abweichende Teile identisch übernommen werden kann und ebenfalls zur Beschreibung dieses Ausführungsbeispiels dient. Wesentliche Unterschiede und die vom vorherigen Ausführungsbeispiel abweichenden wesentlichen Teile werden im Folgenden erläutert.

Dabei zeigt Fig. 8 einen Schnitt durch die vollständige Nabe 1 und Fig. 9 als vergrößertes Detail einen Teilschnitt durch die nabenseitige Freilaufkomponente 10 aus Fig. 8.

Im Unterschied zum vorherigen Ausführungsbeispiel sind bei der Nabe 1 hier keine radial umlaufenden Speichenflansche vorgesehen, sondern die Nabe 1 ist mit Aufnahmen zur Montage sogenannter "straightpull"-Speichen ausgerüstet. Das Nabengehäuse kann dann entsprechend zur Aufnahme von z. B. gerade ausgebildeten und ungekröpften Speichen ("straightpull-Speichen") ausgestaltet sein. Die Nabe 1 nach Fig. 8 kann aber ebenso wie die Nabe 1 nach Fig. 3 mit konventionellen und umlaufenden Speichenflanschen oder dergleichen ausgerüstet sein.

Die Nabe 1 nach Fig. 8 verfügt über eine nabenseitige Freilaufkomponente 10, die zum Teil in Fig. 9 im Schnitt abgebildet ist. Die Freilaufkomponente 10 baut äußerst kompakt und weist insgesamt etwa die Abmessungen eines konventionellen Wälzlagers auf. Nur erfüllt die Freilaufkomponente 10 daneben noch die Funktion der axialen Befestigung des "Freilauflagers" über das Gewinde 15 an dem axialen Körperabschnitt 13, an dem auch der Außenring 50 ausgebildet ist. Weiterhin sind zwei Dichteinheiten 57 an der Freilaufkomponente 10 integriert, von denen die als Dichtring 58 ausgebildete Dichteinheit einen extrem geringen Spalt 18e abdichtet. Dabei ist in dem radial nach innen ragenden Ringflansch 18 eine umlaufende Dichtnut 18d ausgebildet, deren Tiefe etwa der Größe des Spaltes 18e entspricht (+/- 10%). Der Dichtring 58 ermöglicht eine effektive Abdichtung des Inneren des in die Freilaufkomponente 10 integrierten Nabenlagers 14.

Der Spalt 18e weist eine Größe auf, die in der Regel zwischen 1/10 und 1/4 und hier etwa 1/7 des Durchmessers der Wälzkörper 53 beträgt. Der Spalt 18e ist kleiner als 1/4 und hier insbesondere kleiner als 1/10 der axialen Breite des Innenrings 52.

Der axiale Körperabschnitt 13 ist einstückig mit dem Ringflansch 18 verbunden, an dem stirnseitig eine Axialverzahnung 10a mit Eingriffselementen ausgebildet ist. Die Axialverzahnung 10a wirkt mit einer Axialverzahnung 20a an der rotorseitigen Freilaufkomponente 20 zusammen.

Ein Verhältnis der maximalen axialen Breite 10b der nabenseitigen Freilaufkomponente 10 mit integriertem Nabenlager 14 zu einer radialen Erstreckung 14a der nabenseitigen Freilaufkomponente 10 von dem Innenring 52 bis zum radial äußersten Punkt der nabenseitigen Freilaufkomponente 10 beträgt zwischen 0,8 und 1,5 und insbesondere zwischen 1 und 1,3 beträgt.

Ein Verhältnis einer axialen Breite 10b der nabenseitigen Freilaufkomponente 10 zu einer axialen Breite 52b des Innenrings 52 des in die nabenseitige Freilaufkomponente 10 integrierten Nabenlagers 14 beträgt hier zwischen 1 und 1,5 und insbesondere zwischen 1,1 und 1,3 beträgt.

Ein Verhältnis einer axialen Breite 10b der nabenseitigen Freilaufkomponente 10 zu einem Durchmesser 53b eines Wälzkörpers 53 des in die nabenseitige Freilaufkomponente 10 integrierten Nabenlagers 14 beträgt zwischen 2:1 und 3:1 und insbesondere zwischen 2,25 und 2,75 und kann bevorzugt bei 2,45 liegen.

Ein Verhältnis einer radialen Abmessung 14b der nabenseitigen Freilaufkomponente von dem Innenring 52 bis zur Außenfläche des axialen Körperabschnitts 13 zu einem Durchmesser 53b eines Wälzkörpers 53 beträgt zwischen 2,5 und 1,5 und hier zwischen 1,7 und 2.

In. Fig. 9 ist der Anschlag 17d zu erkennen, der an der axialen Innenseite 17c des Fortsatzes 17 ausgebildet ist. Im montierten Zustand liegt der Anschlag 17d an dem radialen Lagerabsatz 36 in dem Nabengehäuse an. Der Anschlag 17d verhindert zusammen mit dem radialen Absatz 36, dass sich die nabenseitige Freilaufkomponente immer weiter in das Nabengehäuse 2 einschraubt. Jedes auf die Axialverzahnung einwirkende Drehmoment führt ohne eine solche Begrenzung im Laufe der Zeit zu einem immer stärkeren Einschrauben. Dadurch könnte es ohne den Anschlag 17d zu einem Aufdehnen und sogar einem Bruch des Nabengehäuses kommen, da der Freilauf zur Übertragung von Drehmomente von bis zu 400 Nm oder mehr ausgelegt ist.

Dazu trägt auch ein lichte Abstand bei, der sich (in axialer Richtung gesehen) zwischen der axial inneren Stirnseite des axialen Körperabschnitts und dem Nabengehäuse ausgebildet ist und hier zwischen etwa 0,05 mm und 0,35 mm beträgt. Dadurch wird sicher gestellt, dass der axiale Körperabschnitt 13 bis an den Anschlag 17d in das Nabengehäuse eingeschraubt wird und sich dort an dem Nabengehäuse abstützt.

Die Nabe erlaubt eine höhere Seitensteifigkeit, eine erhöhte Biegesteifigkeit und einen noch sicheren Betrieb. Gleichzeitig kann das Gewicht gesenkt werden, was insbesondere im sportlichen Bereich und im professionellen Bereich von großer Bedeutung ist.

Ein weiterer Vorteil ist, dass der Nabenkörper einen kleineren Querschnitt aufweist und deshalb strömungsgünstiger ist. Die Anzahl der Teile ist geringer, sodass Wartung, Montage und Demontage einfacher werden. Auch die Fertigung der Nabe wird einfacher.

In allen Ausgestaltungen ist es bevorzugt, dass an den Wälzlagern geschliffene Lagerinnenringe eingesetzt werden. Ebenso kann auch ein geschliffener Außenring eingesetzt werden, sodass sehr geringe Reibungswerte erzielt werden.

**Bezugszeichenliste:**

| | | | |
|---|---|---|---|
| 1 | Nabe | 34 | Innengewinde von 2 |
| 2 | Nabengehäuse | 35 | radialer Absatz in 2 |
| 3 | Endbereich | 36 | radialer Absatz in 2 |
| 4 | Endbereich | 37 | Innenkontur in 8 |
| 5 | Nabenachse | 38 | Dichteinrichtung |
| 6 | Rotorlager | 39 | Endanschlag |
| 7 | Rotorlager | 40 | Endanschlag |
| 8 | Rotor | 41 | Hülsenkörper |
| 9 | Freilaufeinrichtung | 42 | Hülsenkörper |
| 10 | nabenseitige Freilaufkomponente | 43 | radiale Verdickungen |
| 10a | Axialverzahnung | 44 | radiale Verdickungen |
| 10b | axiale Breite von 10 | 45 | T-Form |
| 13 | axialer Körperabschnitt | 46 | Doppelflansch von 39 |
| 13a | axial innere Stirnseite | 47 | Dichtflansch von 40 |
| 14 | Nabenlager, Wälzlager | 48 | O-Ring |
| 14a | radiale Erstreckung | 49 | Schnellspanner |
| 14b | radiale Abmessung | 50 | Außenring von 14 |
| 15 | Außengewinde | 51 | Außenring von 24 |
| 17 | Fortsatz | 52 | Innenring |
| 17c | axiale Innenseite | 52b | axiale Breite von 52 |
| 17d | Anschlag | 53 | Wälzkörper |
| 18 | Ringflansch | 53b | Durchmesser |
| 18d | Dichtnut | 55 | Lauffläche an 50 |
| 18e | Spalt | 56 | Führungsrille |
| 20 | rotorseitige Freilaufkomponente | 57 | Dichteinheit |
| 20a | Axialverzahnung | 58 | Dichteinheit, Dichtring |
| 21 | Außenkontur | 60 | Außenring von 6, 7 |
| 22 | Stirnseite von 10, 20 | 61 | Innenring von 6, 7 |
| 23 | zylindrischer Führungsabschnitt | 100 | Fahrrad |
| 24 | Wälzlager | 101 | Rad, Vorderrad |
| 25 | Steckachse | 102 | Rad, Hinterrad |
| 26 | Lagerabstand 14, 24 | 103 | Rahmen |
| 27 | Lagerabstand 6, 7 | 104 | Gabel, Federgabel |
| 28 | Ringscheibe | 105 | Hinterraddämpfer |
| 29 | Innenfläche von 28 | 106 | Lenker |
| 30 | axiale Richtung | 107 | Sattel |
| 31 | Eingriffsstellung | 109 | Speiche |
| 32 | Vorbelastungseinrichtung | 110 | Felge |
| 33 | Eingriffselemente | 112 | Tretkurbel |

## Patentansprüche

1. Nabe (1) für wenigstens teilweise muskelbetriebene Fahrzeuge und insbesondere Fahrräder (100) umfassend
ein relativ zu einer Nabenachse (5) drehbar gelagertes Nabengehäuse (2) und einen mit wenigstens zwei Rotorlagern (6, 7) gegenüber der Nabenachse (2) drehbar gelagerten Rotor (8), und eine Freilaufeinrichtung (9) mit zwei miteinander zusammenwirkenden Freilaufkomponenten (10, 20), nämlich einer nabenseitigen Freilaufkomponente (10) und einer rotorseitigen Freilaufkomponente (20),
wobei die beiden Freilaufkomponenten (10, 20) in axialer Richtung (30) relativ zueinander wenigstens zwischen einer Freilaufstellung und einer ineinander eingreifenden Eingriffsstellung (31) bewegbar sind, in welcher ein Antriebsdrehmoment übertragbar ist,
wobei der Rotor und auch das Nabengehäuse in der Freilaufstellung und in der Eingriffsstellung in den gleichen axialen Positionen angeordnet sind, wobei die nabenseitige Freilaufkomponente (10) kompakt bauend ausgebildet ist und darin ein Nabenlager (14) zur drehbaren Lagerung des Nabengehäuses (2) integriert und ausgebildet ist, wobei ein Außenring (50) des Nabenlagers (14) in einem axialen Körperabschnitt (13) der nabenseitigen Freilaufkomponente (10) ausgebildet ist und wobei wenigstens eine Dichteinheit (57) das Innere des Nabenlagers (14) vor dem Eintritt von Fremdkörpern schützt.

2. Nabe (1) nach Anspruch 1, wobei der axiale Körperabschnitt (13) mit einem Ringflansch (18) verbunden ist, an dem eine Axialverzahnung (10a) ausgebildet ist, die mit einer Axialverzahnung (20a) an der rotorseitigen Freilaufkomponente (20) zusammenwirkt.

3. Nabe (1) nach dem vorhergehenden Anspruch, wobei eine Dichteinheit (57) zwischen einem Innenring (52) des Nabenlagers (14) und dem Ringflansch (18) angeordnet ist.

4. Nabe (1) nach dem vorhergehenden Anspruch, wobei die Dichteinheit (57) wenigstens einen in einer Dichtnut (18d) angeordneten Dichtring (58) zwischen dem Ringflansch (18) und dem Innenring (52) umfasst.

5. Nabe (1) nach einem der vorhergehenden Ansprüche, wobei ein Verhältnis von maximaler axialer Breite (10b) der nabenseitigen Freilaufkomponente (10) mit integriertem Nabenlager (14) zu einer radialen Erstreckung (14a) der nabenseitigen Freilaufkomponente (10) von dem Innenring (52) bis zum radial äußersten Punkt zwischen 0,8 und 1,5 beträgt oder zwischen 1 und 1,4 beträgt.

6. Nabe (1) nach einem der vorhergehenden Ansprüche, wobei ein Verhältnis einer axialen Breite (10b) der nabenseitigen Freilaufkomponente (10) zu einer axialen Breite (52b) des Innenrings (52) des in die nabenseitige Freilaufkomponente (10) integrierten Nabenlagers (14) zwischen 1 und 1,5 beträgt.

7. Nabe (1) nach einem der vorhergehenden Ansprüche, wobei ein Verhältnis einer axialen Breite (10b) der nabenseitigen Freilaufkomponente (10) zu einem Durchmesser (53b) eines Wälzkörpers (53) des in die nabenseitige Freilaufkomponente (10) integrierten Nabenlagers (14) zwischen 2:1 und 3:1 beträgt.

8. Nabe (1) nach einem der vorhergehenden Ansprüche, wobei ein Verhältnis einer radialen Abmessung (14b) der nabenseitigen Freilaufkomponente von dem Innenring (52) bis zur Außenfläche des axialen Körperabschnitts (13) zu einem Durchmesser (53b) eines Wälzkörpers (53) zwischen 2,5 und 1,5 beträgt.

9. Nabe (1) nach einem der vorhergehenden Ansprüche, wobei die beiden Freilaufkomponenten (10, 20) über wenigstens eine Vorbelastungseinrichtung (32) in die Eingriffsstellung (31) vorbelastet werden und jeweils stirnseitig ausgebildete Eingriffselemente (33) aufweisen, welche in der Eingriffsstellung (31) ineinander eingreifen.

10. Nabe (1) nach einem der vorhergehenden Ansprüche, wobei das Nabenlager (14) zwischen dem Außenring (50) und dem Innenring (52) angeordnete Wälzkörper (53) umfasst und wobei wenigstens in dem Außenring (50) eine Führung (56) für die Wälzkörper (53) ausgebildet ist.

11. Nabe (1) nach einem der vorhergehenden Ansprüche, wobei die rotorseitige Freilaufkomponente (20) drehfest mit dem Rotor (8) und die nabenseitige Freilaufkomponente (10) drehfest und insbesondere axial fest mit dem Nabengehäuse (2) gekoppelt ist.

12. Nabe (1) nach einem der vorhergehenden Ansprüche, wobei der axiale Körperabschnitt (13) einen runden Außenquerschnitt mit einem Außengewinde (15) umfasst, welcher im montierten Zustand in ein Innengewinde (34) des Nabengehäuses (2) geschraubt ist.

13. Nabe (1) nach einem der vorhergehenden Ansprüche, wobei die nabenseitige Freilaufkomponente (10) einen radial nach außen ragenden Fortsatz (17) umfasst, der im montierten Zustand an einem radialen Absatz (35) des Nabenkörpers (2) anliegt.

14. Nabe (1) nach einem der vorhergehenden Ansprüche, wobei die rotorseitige Freilaufkomponente (20) einen Führungsabschnitt (23) mit einer unrunden Außenkontur (21) umfasst, welche mit einer angepassten unrunden Innenkontur (37) in dem Rotor (8) kämmt, um eine axiale Bewegbarkeit der rotorseitigen Freilaufkomponente (20) relativ zu dem Rotor (8) zu ermöglichen und um die drehfeste Kopplung zwischen dem Rotor (8) und der rotorseitigen Freilaufkomponente (20) bereitzustellen und wobei insbesondere das stirnseitige Ende der rotorseitigen Freilaufkomponente (20) als Ringscheibe (28) mit den daran angeordneten Eingriffselementen (33) ausgebildet ist und wobei insbesondere die Vorbelastungseinrichtung (32) in der rotorseitigen Freilaufkomponente (20) aufgenommen ist und die stirnseitige Ringscheibe (28) mit den Eingriffselementen (33) in Richtung auf die nabenseitige Freilaufkomponente (10) drückt.

15. Nabe (1) nach einem der vorhergehenden Ansprüche, umfassend eine Steckachse (25) und/oder wobei Endanschläge (39, 40) vorgesehen sind, die zur Aufnahme in den Ausfallenden eines Rahmens (103) ausgebildet sind und die einen kleineren Außendurchmesser aufweisen als ein Innendurchmesser der Nabenachse (5).

## Claims

1. Hub (1) for at least partially muscle-powered vehicles and in particular bicycles (100) comprising
a hub shell (2) rotatably supported relative to a hub axle (5) and a rotor (8) rotatably supported relative to the hub axle (2) by means of at least two rotor bearings (6, 7), and a freewheel device (9) having a pair of interacting freewheel components (10, 20) namely, a hub-side freewheel component (10) and a rotor-side freewheel component (20),
wherein the two freewheel components (10, 20) are movable relative to one another in the axial direction (30) at least between a freewheel position and an intermeshing engagement position (31) in which a driving torque can be transmitted, wherein the rotor and also the hub shell is/are disposed in the same axial positions both in the freewheel position and in the engagement position, wherein the hub-side freewheel component (10) is compact in configuration and a hub bearing (14) to rotatably support the hub shell (2) is integrated and configured therein, wherein an outer ring (50) of the hub bearing (14) is configured in an axial body section (13) of the hub-side freewheel component (10) and wherein at least one sealing unit (57) protects the interior of the hub bearing (14) from the entry of foreign bodies.

2. The hub (1) according to claim 1 wherein the axial body section (13) is connected with an annular flange (18) where an axial toothing (10a) is configured which interacts with an axial toothing (20a) on the rotor-side freewheel component (20).

3. The hub (1) according to the preceding claim wherein a sealing unit (57) is disposed between an inner ring (52) of the hub bearing (14) and the annular flange (18).

4. The hub (1) according to the preceding claim wherein the sealing unit (57) comprises at least one seal ring (58) disposed in a sealing groove (18d) between the annular flange (18) and the inner ring (52).

5. The hub (1) according to any of the preceding claims wherein a ratio of the maximum axial width (10b) of the hub-side freewheel component (10) with an integrated hub bearing (14) to a radial extension (14a) of the hub-side freewheel component (10) from the inner ring (52) up to the radially extreme point is between 0.8 and 1.5 or between 1 and 1.4.

6. The hub (1) according to any of the preceding claims wherein a ratio of an axial width (10b) of the hub-side freewheel component (10) to an axial width (52b) of the inner ring (52) of the hub bearing (14) integrated in the hub-side freewheel component (10) is between 1 and 1.5.

7. The hub (1) according to any of the preceding claims wherein a ratio of an axial width (10b) of the hub-side freewheel component (10) to a diameter (53b) of a rolling member (53) of the hub bearing (14) integrated in the hub-side freewheel component (10) is between 2:1 and 3:1.

8. The hub (1) according to any of the preceding claims wherein a ratio of a radial dimension (14b) of the hub-side freewheel component from the inner ring (52) up to the outer surface of the axial body section (13) to a diameter (53b) of a rolling member (53) is between 2.5 and 1.5.

9. The hub (1) according to any of the preceding claims wherein the two freewheel components (10, 20) are biased in the engagement position (31) by means of at least one biasing device (32), each comprising engagement elements (33) formed on the front face which intermesh in the engagement position (31).

10. The hub (1) according to any of the preceding claims wherein the hub bearing (14) comprises rolling members (53) disposed between the outer ring (50) and the inner ring (52) and wherein a guide (56) for the rolling members (53) is configured at least in the outer ring (50).

11. The hub (1) according to any of the preceding claims wherein the rotor-side freewheel component (20) is non-rotatably coupled with the rotor (8) and the hub-side freewheel component (10) is non-rotatably and in particular axially fixedly coupled with the hub shell (2).

12. The hub (1) according to any of the preceding claims wherein the axial body section (13) comprises a round outer cross-section having an external thread (15) which in the mounted state is screwed into an internal thread (34) of the hub shell (2).

13. The hub (1) according to any of the preceding claims wherein the hub-side freewheel component (10) comprises a radially outwardly protruding appendix (17) which when mounted rests against a radial shoulder (35) of the hub body (2).

14. The hub (1) according to any of the preceding claims wherein the rotor-side freewheel component (20) comprises a guide section (23) having a non-round outer contour (21) meshing with an adapted non-round inner contour (37) in the rotor (8) to enable axial movability of the rotor-side freewheel component (20) relative to the rotor (8) and to provide the non-rotatable coupling between the rotor (8) and the rotor-side freewheel component (20) and wherein in particular the front-face end of the rotor-side freewheel component (20) is configured as a washer (28) with the engagement elements (33) disposed thereat and wherein in particular the biasing device (32) is accommodated in the rotor-side freewheel component (20) and urges the front-face washer (28) with the engagement elements (33) in the direction of the hub-side freewheel component (10).

15. The hub (1) according to any of the preceding claims comprising a through axle (25) and/or wherein limit stops (39, 40) are provided to be received in the dropouts of a frame (103) and whose outer diameter is smaller than an inner diameter of the hub axle (5).

## Revendications

1. Moyeu (1) pour véhicules à actionnement au moins partiellement musculaire, en particulier bicyclettes (100) comprenant
un boîtier de moyeu (2) monté de manière rotative relativement à l'axe de moyeu (5) et un rotor (8) monté de manière rotative par rapport à l'axe de moyeu (5) via au moins deux roulements de rotor (6, 7), et un dispositif de roue libre (9) comprenant deux composants de roue libre (10, 20) coopérant l'un avec l'autre, c'est-à-dire un composant de roue libre côté moyeu (10) et un composant de roue libre côté rotor (20),
les deux composants de roue libre (10, 20) étant mobiles en direction axiale (30) relativement l'un par rapport à l'autre au moins entre une position de roue libre et une position d'engagement (31) s'engageant l'un dans l'autre, position d'engagement dans laquelle un couple d'actionnement peut être transmis,
moyeu dans lequel le rotor et aussi le boîtier de moyeu sont disposés dans les même positions axiales dans la position de roue libre et dans la position d'engagement,
dans lequel
le composant de roue libre côté moyeu (10) est réalisé dans sa construction de manière compacte et, dans ce dernier, un roulement de moyeu (14) est intégré et réalisé pour supporter de manière rotative le boîtier de moyeu (2), une bague extérieure (50) du roulement de moyeu (14) est réalisé dans une partie de corps axiale (13) du composant de roue libre côté moyeu (10) et dans lequel au moins une unité d'étanchéité (57) protège l'intérieur du roulement de moyeu (14) de l'entrée de corps étrangers.

2. Moyeu (1) selon la revendication 1, dans lequel la partie de corps axiale (13) est raccordée avec un flasque annulaire (18), sur lequel est réalisée une denture axiale (10a) qui coopère avec une denture axiale (20a) sur le composant de roue libre côté rotor (20).

3. Moyeu (1) selon la revendication précédente, dans lequel une unité d'étanchéité (57) est disposée entre une bague intérieure (52) du roulement de moyeu (14) et le flasque annulaire (18).

4. Moyeu (1) selon la revendication précédente, dans lequel l'unité d'étanchéité (57) comprend au moins un anneau d'étanchéité (58) disposé dans une gorge d'étanchéité (18d) entre le flasque annulaire (18) et la bague intérieure (52).

5. Moyeu (1) selon l'une des revendications précédentes, dans lequel un rapport entre une largeur axiale maximale (10b) du composant de roue libre côté moyeu (10) muni d'un roulement de moyeu (14) intégré et une extension radiale (14a) du composant de roue libre côté moyeu (10) de la la bague intérieure (52) au point extrême radial se chiffre entre 0,8 et 1,5 ou entre 1 et 1,4.

6. Moyeu (1) selon l'une des revendications précédentes, dans lequel un rapport entre une largeur axiale (10b) du composant de roue libre côté moyeu (10) et une largeur axiale (52b) de la bague intérieure (52) du roulement de moyeu (14) intégré dans le composant de roue libre côté moyeu (10) se chiffre entre 1 et 1,5.

7. Moyeu (1) selon l'une des revendications précédentes, dans lequel un rapport entre une largeur axiale (10b) du composant de roue libre côté moyeu (10) et un diamètre (53b) d'un élément de roulement (53) du roulement de moyeu (14) intégré dans le composant de roue libre côté moyeu (10) se chiffre entre 2:1 et 3:1.

8. Moyeu (1) selon l'une des revendications précédentes, dans lequel un rapport entre une dimension radiale (14b) du composant de roue libre côté moyeu depuis la bague intérieure (52) à la surface extérieure de la partie de corps axiale (13) et un diamètre (53b) d'un élément de roulement (53) se chiffre entre 2,5 et 1,5.

9. Moyeu (1) selon l'une des revendications précédentes, dans lequel les deux composants de roue libre (10, 20) sont préchargés dans la position d'engagement (31) par au moins un dispositif de précharge (32), chacun comprenant des éléments d'engagement (33) réalisés sur la face frontale, lesdits éléments s'engageant l'un dans l'autre dans la position d'engagement (31).

10. Moyeu (1) selon l'une des revendications précédentes, dans lequel le roulement de moyeu (14) comprend des éléments de roulement (53) disposés entre la bague extérieure (50) et la bague intérieure (52) et dans lequel au moins un guide (56) pour les éléments de roulement (53) est réalisé dans la bague extérieure (50).

11. Moyeu (1) selon l'une des revendications précédentes, dans lequel le composant de roue libre côté rotor (20) est couplé de manière fixe en rotation avec le rotor (8) et le composant de roue libre côté moyeu (10) est couplé de manière fixe en rotation, en particulier fixe axialement, avec le boîtier de moyeu (2).

12. Moyeu (1) selon l'une des revendications précédentes, dans lequel la partie de corps axiale (13) comprend une section transversale extérieure ronde muni d'un filetage extérieur (15), qui dans l'état monté est vissé dans un filetage intérieur (34) du boîtier de moyeu (2).

13. Moyeu (1) selon l'une des revendications précédentes, dans lequel le composant de roue libre côté moyeu (10) comprend un prolongement (17) s'étendant radialement vers l'extérieur, qui dans l'état monté repose sur un épaulement radiale (35) du corps de moyeu (2).

14. Moyeu (1) selon l'une des revendications précédentes, dans lequel le composant de roue libre côté rotor (20) comprend une partie de guidage (23) présentant un contour extérieur (21) non-rond, qui s'accouple avec un contour intérieur (37) non-rond adapté dans le rotor (8), pour permettre un déplacement axial du composant de roue libre côté rotor (20) relativement au rotor (8) et pour réaliser le couplage fixe en rotation entre le rotor (8) et le composant de roue libre côté rotor (20) et dans lequel en particulier l'extrémité côté frontal du composant de roue libre côté rotor (20) est réalisé comme une rondelle annulaire (28) avec les éléments d'engagement (33) disposés sur celle-ci et dans lequel en particulier le dispositif de précharge (32) est reçu dans le composant de roue libre côté rotor (20) et la rondelle annulaire (28) côté frontal munie des éléments d'engagement (33) presse en direction du composant de roue libre côté moyeu (10).

15. Moyeu (1) selon l'une des revendications précédentes, comprenant un axe de roue (25) et/ou dans lequel des butées d'extrémité (39, 40) sont prévues, qui sont réalisées pour être reçu dans les pattes d'extrémité du cadre (103) et dont le diamètre extérieur est inférieur au diamètre intérieur de l'axe de moyeu (5).
